# EUROPEAN PATENT APPLICATION

(11) **EP 4 261 105 A1**
(43) Date of publication of application: **18.10.2023**
(21) Application number: 22168247.9
(22) Date of filing: 13.04.2022
(51) Int. Cl.: B62D 15/02, G05D 1/00, G06V 20/56, G06N 3/04

(54) **PLANNING OF TRAJECTORIES FOR AN AUTOMATED VEHICLE**

(71) Applicant: Bayerische Motoren Werke Aktiengesellschaft, 80809 München (DE)
(72) Inventor: Schneider, Sebastian, 85622 Feldkirchen (DE); Parolini, Luca, 84032 Landshut (DE)

(57) **Abstract**

One aspect of the invention is a driver assistance system for an automated vehicle, wherein the driver assistance system comprises a perception unit, a planning unit, an acting unit, and an adversarial unit wherein the perception unit is configured to create an environment model of the environment of the automated vehicle, the adversarial unit is configured to provide a set of hypotheses about the environment based on the environment model, the planning unit is configured to determine a trajectory for the movement of the automated vehicle based on the environment model and the set of hypotheses, and the acting unit is configured to guide the automated vehicle along the trajectory.

## Description

This invention relates to a driver assistance system and a computer-implemented method for an automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.
Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

A driver assistance system for an automated vehicle needs to plan a trajectory for the automated vehicle. Because of limited information about the environment of the automated vehicle, this planning can never be perfect and can result in uncomfortable or dangerous situations, because the driver assistance system may not be aware of an important aspect of the environment of the automated vehicle.

Relevant state of the art is described in DE 10 2020 203 745 A1.

Therefore, the purpose of this invention is to improve the quality of the planned trajectory of an automated vehicle.

One aspect of the invention describes a driver assistance system for an automated vehicle, wherein the driver assistance system comprises a perception unit, a planning unit, an acting unit, and an adversarial unit.

The perception unit is configured to create an environment model of the environment of the automated vehicle, in particular by using at least one sensor of the automated vehicle, e.g. radar, lidar, camera or ultrasonic sensor. The environment model is a digital representation of the environment of the automated vehicle.

The environment model represents for example objects in the environment of the automated vehicle like other road users (vehicles, pedestrians, etc.), buildings, or parts of the traffic infrastructure (traffic lights, etc.). Moreover, the environment model may also represent dynamic aspects of at least one object in the environment of the automated vehicle, e.g. trajectory, speed or direction of the at least one object in the environment of the automated vehicle.

The adversarial unit is configured to provide a set of hypotheses about the environment based on the environment model, wherein the set of hypotheses about the environment contains at least one hypothesis about the environment of the automated vehicle.

Because the environment model is only a representation of the environment of the automated vehicle, created by using sensors, it is possible that the environment model is not in all aspects a complete and correct representation of the environment.

Therefore in general, the environment model itself is a set of hypotheses about the actual environment of the automated vehicle. In contrast to this very broad approach, in case of the present invention, an hypothesis is in particular an adversarial hypothesis. An adversarial hypothesis is based on the assumption that the environment of the automated vehicle is not perceived accurately and therefore the adversarial hypothesis describes an alternative "what if" scenario, assuming that the actual environment of the automated vehicle differs from the environment model. The adversarial hypothesis describes one amendment of the environment model, which is presumably necessary for the environment model to be an accurate representation of the actual environment of the automated vehicle.

The planning unit is configured to determine a trajectory for the movement of the automated vehicle based on the environment model and the set of hypotheses, in particular by using known approaches for trajectory planning.

The acting unit is configured to guide the automated vehicle along the trajectory. This guiding of the automated vehicle may for example be performed by controlling actuators of the automated vehicle, e.g. engine(s), brake(s) and steering.

The invention at hand can be used offline in a simulation environment to improve the driver assistance system, but also online in a driver assistance system, which is contained by a physical vehicle.

In the physical vehicle, the idea is to generate environment model inputs, which are not necessarily aligned with what the sensors of the vehicle observe. These inputs should be realistic but also safety critical. A hypothesis validation unit then, at runtime and based on what the sensors actually see, may removes hypotheses that do not corresponds to what sensors see. For example, when coming closer to a cross, a car be generated coming to the intersection, even though none of the sensors saw it. The hypothesis validation unit would allow for such a scenario, since it does not contradict what sensors observe. When the car comes finally close to the crossing, if sensors observe that there is no vehicle coming toward the EGO vehicle, then the hypothesis validation unit would remove all generated hypotheses in which a vehicle is approaching the crossing and coming toward the EGO vehicle.

The planning unit does not have to react to the generated input, but it has to show that a safe trajectory would still be executable if any of those scenario would actually happen.

In a preferred embodiment of the invention the adversarial unit comprises an hypothesis provider unit and an hypothesis validation unit.

The hypothesis provider unit is configured to provide a preliminary set of hypotheses about the environment based on the environment model.

The hypothesis validation unit is configured to validate, for each specific hypothesis contained in the preliminary set hypothesis whether the specific hypothesis satisfies at least one constraint.

The at least one constraint sets a boundary for the plausibility of the preliminary hypotheses. The at least one constraint is in particular a law of physics itself or derived from a law of physics. For example, the at least one constraint is a kinematic motion law, which may rule out certain predicted movement of objects. For example, the at least one constraint is an optical law, which may rule out the existence of objects in the environment, because those objects would have to occlude other objects. For example, the at least one constraint is a semantic connection between at least two objects in the environment, like hypothetical lane markings, which cannot go through detected guardrails.

Moreover, the hypothesis validation unit is configured to discard those specific hypotheses from the preliminary set of hypotheses, which do not satisfy the at least one constraint, to provide the preliminary set of hypotheses as the set of hypotheses about the environment.

In another preferred embodiment of the invention the hypothesis provider unit is configured to provide the preliminary set of hypotheses about the environment based on the environment model and based on expert knowledge. For ruling out hypotheses, expert knowledge about occlusion, physical models, and/or environmental constraints can allow to identify appropriate rules.

In another preferred embodiment of the invention, the adversarial unit comprises generative adversarial networks, wherein the generative adversarial networks are configured to provide the preliminary set of hypotheses about the environment based on the environment model.

Generative adversarial networks are an approach to generative modeling using deep learning methods, such as convolutional neural networks.

Generative modeling is an unsupervised learning task in machine learning that involves automatically discovering and learning the regularities or patterns in input data in such a way that the model can be used to generate or output new examples that plausibly could have been drawn from the original dataset.

Generative adversarial networks are a way of training a generative model by framing the problem as a supervised learning problem with two sub-models: the generator model that is trained to generate new examples, and the discriminator model that tries to classify examples as either real (from the domain) or fake (generated). The two models are trained together in a zero-sum game, adversarial, until the discriminator model is fooled about half the time, meaning the generator model is generating plausible examples.

In another preferred embodiment of the invention the hypothesis provider unit is a generator of the generative adversarial networks and wherein the hypothesis validation unit is the discriminator of the generative adversarial networks.

In another preferred embodiment of the invention the set of hypotheses contains at least one hypothesis about a dynamic object, e.g. an other road user, in the environment of the automated vehicle, or an hypothesis about a static object, e.g. a sign, in the environment of the automated vehicle.

In another preferred embodiment of the invention the set of hypotheses HSF contains at least one hypothesis about the dynamic behavior of an existing object in the environment of the automated vehicle. This object is in particular an other road user, e.g. a vehicle, whereas the environment model contains a description of the dynamic behavior of this object. In case that this object is a vehicle, the environment model contains orientation, velocity, acceleration and/or trajectory of the vehicle. The at least one hypothesis describes a deviation of the dynamic behavior of this object contained in the environment model, e.g. a different orientation, velocity, acceleration and/or trajectory.

In another preferred embodiment of the invention the set of hypotheses contains at least one hypothesis about lane geometries in the environment of the automated vehicle. The environment model contains a description of lane geometries in the environment of the automated vehicle, describing e.g. the number, orientation and/or geometry of traffic lanes.

The at least one hypothesis about lane geometries in the environment of the automated vehicle describes a deviation of the lane geometry contained in the environment model, e.g. different number of, orientation and/or geometry of traffic lanes.

In another preferred embodiment of the invention, set of hypotheses HSF contains at least one hypothesis about the localization of the automated vehicle within the environment model. The environment model contains a description of the location of automated vehicle within its environment. The at least one hypothesis about the localization of the automated vehicle describes a deviation of the localization of the automated vehicle from the localization contained in the environment model. For example, the hypothesis can describe that the automated vehicle is localized on a different traffic lane than in the environment model or even outside of a traffic lane.

A second aspect of the invention is a computer-implemented method for training the generative adversarial networks wherein a training step of the training considers whether a hypothesis from the preliminary set of hypotheses is relevant for the safety of the vehicle.

The generative adversarial networks according to this aspect of the invention are contained within a driver assistance system for an automated vehicle, wherein the driver assistance system comprises a perception unit, a planning unit, an acting unit, and an adversarial unit.

The perception unit is configured to create an environment model of the environment of the automated vehicle. The adversarial unit is configured to provide a set of hypotheses about the environment based on the environment model. The planning unit is configured to determine a trajectory for the movement of the automated vehicle based on the environment model and the set of hypotheses. The acting unit is configured to guide the automated vehicle along the trajectory.

According to the second aspect of the invention, the adversarial unit comprises a hypothesis provider unit and a hypothesis validation unit, wherein the hypothesis provider unit is configured to provide a preliminary set of hypotheses about the environment based on the environment model. The hypothesis validation unit is configured to validate, for each specific hypothesis contained in the preliminary set hypothesis whether the specific hypothesis satisfies at least one constraint. The hypothesis validation unit is configured to discard those specific hypothesis from the preliminary set of hypotheses, which do not satisfy the at least one constraint, to provide the set of hypotheses about the environment.

According to the second aspect of the invention, the adversarial unit comprises the generative adversarial networks, wherein the generative adversarial networks are configured to provide the preliminary set of hypotheses about the environment based on the environment model. In particular, the hypothesis provider unit is a generator of the generative adversarial networks and the hypothesis validation unit is the discriminator of the generative adversarial networks.

Conventionally, generative adversarial networks are trained in individual training steps. During each training step, the generator generates an example. The discriminator receives the generated example and a real example and classifies, which of the two examples is the real example.

When the discriminator was able to correctly distinguish the real example and the generated example, the generator will be improved. When the discriminator was not able to correctly distinguish the real example and the generated example, the discriminator will be improved.

Compared to this conventional approach for training generative adversarial networks, the training step of the training considers whether a hypothesis from the preliminary set of hypotheses is relevant for the safety of the vehicle, according to the second aspect of the invention.

According to the invention, (training) examples are hypotheses about the environment of the automated vehicle.

When the discriminator was not able to correctly distinguish the real example and the generated example, it is checked whether the generated example is relevant for the safety of the vehicle. Then the generator is improved in a way to generate examples, which are more relevant for the safety of the automated vehicle.

Relevance for the safety of the automated vehicle can be described binary (e.g. is it relevant or not?), continuously using a cost function (e.g. based on distances between the automated vehicle and objects in its environment) or categorial (e.g. did the new example lead to an accident with an other road user versus a lane change).

In a preferred embodiment of the invention, the generative adversarial networks are embedded into a reinforcement learning setup, which will guide the learning of the generator towards generating hypotheses, which will cause accidents or undesired behavior.

A third aspect of the invention is a computer-implemented method for a driver assistance system for an automated vehicle.

One step of the method is creating an environment model of the environment of the automated vehicle.

Another step of the method is providing a set of hypotheses about the environment based on the environment model.

Another step of the method is determining a trajectory for the movement of the automated vehicle based on the environment model and the set of hypotheses.

Another step of the method is guiding the automated vehicle along the trajectory.

For a better understanding of the present invention, and to show how the same may be carried into effect, reference will now be made, by way of example, to the accompanying drawing, in which:
Fig. 1 shows an exemplified structure of the driver assistance system according to the invention,
Fig. 2 shows an exemplified traffic situation and explains the behavior of the driver assistance system according to the invention,
Fig. 3 shows another exemplified traffic situation and explains the behavior of the driver assistance system according to the invention,
Fig. 4 shows another exemplified traffic situation and explains the behavior of the driver assistance system according to the invention, and
Fig. 5 shows an exemplified training process for generative adversarial networks according to the invention.

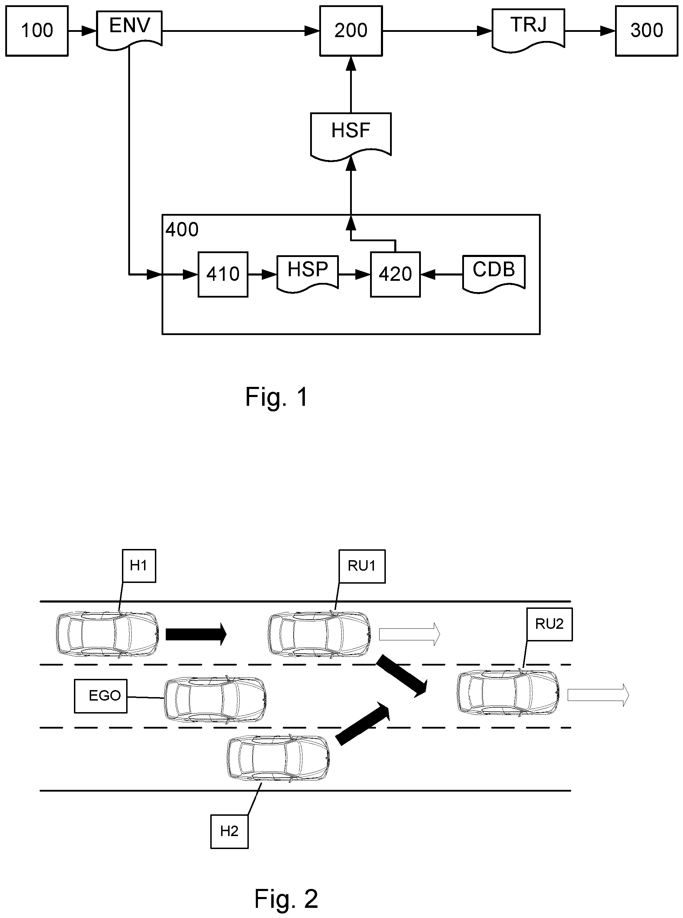

Fig. 1 shows a driver assistance system for an automated vehicle EGO, wherein the driver assistance system comprises a perception unit 100, a planning unit 200, an acting unit 300, and an adversarial unit 400.

The perception unit 100 is configured to create an environment model ENV of the environment of the automated vehicle EGO.

The adversarial unit 400 is configured to provide a set of hypotheses HSF about the environment based on the environment model ENV.

The planning unit 200 is configured to determine a trajectory TRJ for the movement of the automated vehicle EGO based on the environment model ENV and the set of hypotheses HSF.

The acting unit 300 is configured to guide the automated vehicle EGO along the trajectory TRJ.

The adversarial unit 400 comprises a hypothesis provider unit 410 and an hypothesis validation unit 420. The hypothesis provider unit 410 is configured to provide a preliminary set of hypotheses HSP about the environment based on the environment model ENV. The hypothesis validation unit 420 is configured to validate, for each specific hypothesis contained in the preliminary set hypothesis HSP whether the specific hypothesis satisfies at least one constraint CDB.

The hypothesis validation unit 420 is configured to discard those specific hypotheses from the preliminary set of hypotheses HSP, which do not satisfy the at least one constraint CDB, to provide the set of hypotheses HSF about the environment.

In a preferred embodiment of the invention, the hypothesis provider unit 410 is configured to provide the preliminary set of hypotheses HSP about the environment based on the environment model ENV and based on expert knowledge.

In another preferred embodiment of the invention, the adversarial unit 400 comprises generative adversarial networks, wherein the generative adversarial networks are configured to provide the preliminary set of hypotheses HSP about the environment based on the environment model ENV. The hypothesis provider unit 410 is a generator of the generative adversarial networks and the hypothesis validation unit 420 is the discriminator of the generative adversarial networks.

The set of hypotheses HSF contains at least one hypothesis about a dynamic object in the environment of the automated vehicle EGO, or an hypothesis about a static object in the environment of the automated vehicle EGO.

Fig. 2 shows an exemplified traffic situation and explains the behavior of the driver assistance system according to the invention. The exemplified traffic situation contains the automated vehicle EGO, a first road user RU1 and a second road user RU2. The first road user RU1 moves along its respective white arrow and the second road user RU2 moves along its respective white arrow.

The environment model ENV contains representations of the automated vehicle EGO, the first road user RU1, the second road user RU2 and their respective dynamic behavior, in particular their kinematics.

The set of hypotheses HSF contains at least one hypothesis about the dynamic behavior of an existing object in the environment of the automated vehicle EGO. In particular, the set of hypotheses HSF contains a hypothesis about the movement of the first road user RU1, which is a movement along its respective black arrow. This hypothesis would result in road user RU1 performing a lane change and road user RU1 ending up on the same lane as the automated vehicle EGO. Depending on the relative speeds of the road user RU1 and the automated vehicle, this hypothesis can relevant for the safety of the automated vehicle EGO.

In particular, the set of hypotheses HSF also contains a hypothesis of about the existence of an additional road user H1, which moves along its respective black arrow. As the road user H1 is on a different lane than the automated vehicle EGO, this hypothesis is not relevant for the safety of the automated vehicle EGO.

In particular, the set of hypotheses HSF also contains a hypothesis of about the existence of an additional road user H2, which moves along its respective black arrow. This hypothesis would result in road user H2 performing a lane change and road user H2 ending up on the same lane as the automated vehicle EGO. Depending on the relative speeds of the road user H2 and the automated vehicle, this hypothesis can relevant for the safety of the automated vehicle EGO.

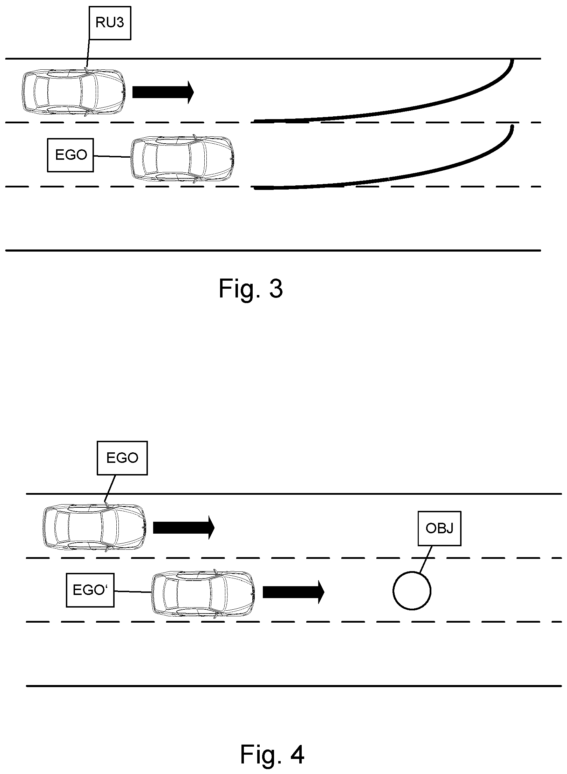

Fig. 3 shows an exemplified traffic situation and explains the behavior of the driver assistance system according to the invention. Fig. 3 shows the automated vehicle EGO and an other road RU3 in the environment of the automated vehicle EGO. The environment model ENV contains a description of the lane geometry of the driving lanes in the environment of the automated vehicle EGO. In particular, the environment model ENV contains a representation of the lane, on which the automated vehicle EGO is driving on, as being a straight line, which can be seen as dashed lines in Fig. 3.

The set of hypotheses HSF contains at least one hypothesis about lane geometries in the environment of the automated vehicle EGO. In particular, the set of hypotheses HSF contains a hypothesis that the lane, on which the automated vehicle EGO is driving on, is describing a bend, which can be seen as solid lines in Fig. 3.

Fig. 4 shows an exemplified traffic situation and explains the behavior of the driver assistance system according to the invention. Fig. 4 shows the automated vehicle EGO on one lane of the road and on object OBJ on another lane of the road.

The set of hypotheses HSF contains at least one hypothesis about the localization of the automated vehicle EGO within the environment model. In particular, the set of hypotheses HSF contains a hypothesis about the localization of the automated vehicle EGO, whereas the hypothesis describes that the automated vehicle EGO should be placed on position EGO'. EGO' is on the same lane on the road as the object OBJ, so this hypothesis is relevant for the safety of the automated vehicle EGO.

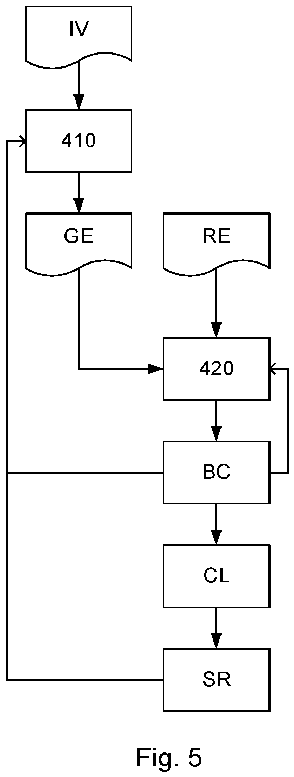

Fig. 5 shows an exemplified training process for generative adversarial networks according to the invention.

Conventional training of generative adversarial networks uses a random input vector (RIV) to initialize a generator, which is the hypothesis provider unit (410) in the context of the invention at hand.

The generator generates an example (GE) and provides it to a discriminator, which is the hypothesis validation unit (420) in the context of the invention at hand.

The discriminator also receives a real example (RE) and classifies whether the generated example (GE) or the real example (RE) is the real example.

A binary classification unit (BC) then determines whether the classification by the discriminator was correct. When the classification was correct, the binary classification unit (BC) triggers an improvement of the generator. When the classification was incorrect, the binary classification unit (BC) triggers an improvement of the discriminator.

According to the invention and in contrast to the traditional training of generative adversarial networks, a training step of the training considers whether a hypothesis from the preliminary set of hypotheses (HSP) is relevant for the safety of the vehicle.

In the context of the invention a generated example (GE) is a hypothesis from the preliminary set of hypotheses (HSP).

To consider whether a hypothesis from the preliminary set of hypotheses (HSP) is relevant for the safety of the vehicle, a generated example (GE), which was incorrectly classified as being the real example by the discriminator, gets used in a closed loop simulation (CL) of the automated vehicle (EGO) within its environment.

Then the safety relevance of the generated vehicle (GE) is determined by a safety relevance unit (SR), in particular by determining a binary, continuous or categorial metric of safety. For example, distances or difference speeds between the automated vehicle and objects in the environment of the automated vehicle are use to calculate a continuous metric of safety.

This metric of safety is used to trigger an improvement of the generator to generate examples, which are more relevant for the safety of the automated vehicle (EGO) in future training steps.

In particular, this considering whether a hypothesis from the preliminary set of hypotheses (HSP) is relevant for the safety of the vehicle is embedded into a reinforcement learning setup, which will guide the learning of the generator towards generating hypotheses, which will cause accidents or undesired behavior.

## Claims

1. Driver assistance system for an automated vehicle (EGO), wherein the driver assistance system comprises a perception unit (100), a planning unit (200), an acting unit (300), and an adversarial unit (400) wherein
• the perception unit (100) is configured to create an environment model (ENV) of the environment of the automated vehicle (EGO),
• the adversarial unit (400) is configured to provide a set of hypotheses (HSF) about the environment based on the environment model (ENV),
• the planning unit (200) is configured to determine a trajectory (TRJ) for the movement of the automated vehicle (EGO) based on the environment model (ENV) and the set of hypotheses (HSF), and
• the acting unit (300) is configured to guide the automated vehicle (EGO) along the trajectory (TRJ).

2. Driver assistance system according to claim 1, wherein the adversarial unit (400) comprises an hypothesis provider unit (410) and an hypothesis validation unit (420), wherein
• the hypothesis provider unit (410) is configured to provide a preliminary set of hypotheses (HSP) about the environment based on the environment model (ENV),
• the hypothesis validation unit (420) is configured to validate, for each specific hypothesis contained in the preliminary set hypothesis (HSP) whether the specific hypothesis satisfies at least one constraint (CDB), and
• the hypothesis validation unit (420) is configured to discard those specific hypothesis from the preliminary set of hypotheses (HSP), which do not satisfy the at least one constraint (CDB), to provide the set of hypotheses (HSF) about the environment.

3. Driver assistance system according to claim 2, wherein the hypothesis provider unit (410) is configured to provide the preliminary set of hypotheses (HSP) about the environment based on the environment model (ENV) and based on expert knowledge.

4. Driver assistance system according to claim 2, wherein the adversarial unit (400) comprises generative adversarial networks, wherein the generative adversarial networks are configured to provide the preliminary set of hypotheses (HSP) about the environment based on the environment model (ENV).

5. Driver assistance system according to claim 4, wherein the hypothesis provider unit (410) is a generator of the generative adversarial networks and wherein the hypothesis validation unit (420) is the discriminator of the generative adversarial networks.

6. Driver assistance system according to one of the previous claims, wherein the set of hypotheses (HSF) contains at least one hypothesis about a dynamic object in the environment of the automated vehicle (EGO), or an hypothesis about a static object in the environment of the automated vehicle (EGO).

7. Driver assistance system according to one of the previous claims, wherein the set of hypotheses (HSF) contains at least one hypothesis about the dynamic behavior of an existing object in the environment of the automated vehicle (EGO).

8. Driver assistance system according to one of the previous claims, wherein the set of hypotheses (HSF) contains at least one hypothesis about lane geometries in the environment of the automated vehicle (EGO).

9. Driver assistance system according to one of the previous claims, wherein the set of hypotheses (HSF) contains at least one hypothesis about the localization of the automated vehicle (EGO) within the environment model.

10. Computer-implemented method for training the generative adversarial networks according to claim 4, wherein a training step of the training considers whether a hypothesis from the preliminary set of hypotheses (HSP) is relevant for the safety of the vehicle.

11. Computer-implemented method according to claim 10, wherein the generative adversarial networks are embedded into a reinforcement learning setup, which will guide the learning of the generator towards generating hypotheses, which will cause accidents or undesired behavior.

12. Computer-implemented method for a driver assistance system for an automated vehicle (EGO), comprising the steps of:
• Creating an environment model (ENV) of the environment of the automated vehicle (EGO),
• Providing a set of hypotheses (HSF) about the environment based on the environment model (ENV),
• Determining a trajectory (TRJ) for the movement of the automated vehicle (EGO) based on the environment model (ENV) and the set of hypotheses (HSF), and
• Guiding the automated vehicle (EGO) along the trajectory (TRJ).
